# EUROPEAN PATENT SPECIFICATION

(11) **EP 1 778 787 B1**
(45) Date of publication and mention of the grant of the patent: **21.11.2012**
(21) Application number: 05790881.6
(22) Date of filing: 19.07.2005
(51) Int. Cl.: B82Y 30/00, C08L 67/02, C08L 67/00

(54) **ANTI-STATIC FLAME RETARDANT RESIN COMPOSITION AND METHODS FOR MANUFACTURE THEREOF**
ANTISTATISCHE FLAMMENHEMMENDE HARZZUSAMMENSETZUNG UND HERSTELLUNGSVERFAHREN DAFÜR
COMPOSITION DE RESINE IGNIFUGE ANTISTATIQUE ET PROCEDES DE FABRICATION DE CELLE-CI

(30) Priority: 22.07.2004 JP 2004214533
(43) Date of publication of application: 02.05.2007
(73) Proprietor: SABIC Innovative Plastics IP B.V., 4612 PX Bergen op Zoom (NL)
(72) Inventor: UCHIYAMA, Tatsuya, Moka-shi, Tochigi-ken 321-4334 (JP)
(74) Representative: Strehlke, Ingo Kurt
(86) International application number: PCT/US2005/025422
(87) International publication number: WO 2006/020221

(56) References cited:
- EP-A- 0 837 100
- EP-A- 1 452 563
- PATENT ABSTRACTS OF JAPAN vol. 1995, no. 05, 30 June 1995 (1995-06-30) & JP 07 033968 A (KURARAY CO LTD), 3 February 1995 (1995-02-03) cited in the application
- PATENT ABSTRACTS OF JAPAN vol. 1997, no. 10, 31 October 1997 (1997-10-31) & JP 09 143350 A (KANEGAFUCHI CHEM IND CO LTD), 3 June 1997 (1997-06-03) cited in the application

## Description

### BACKGROUND OF INVENTION

This disclosure relates to anti-static compositions having a flame resistance of more than UL-94 V2 without the need for halogen or phosphorous-containing flame retardants or auxiliary agents, and a method of manufacture thereof.

Thermoplastic polyester resins, for example, polyalkylene terephthalate resins, are used in a wide range of fields such as electrical and electronic equipment components and media components. It is known in the art to impart electrical conductivity to polyester resin compositions by adding electrically conductive carbon black or metallic fibers, for imparting anti-static characteristic to the resin. Examples include JP Patent Publication No.1999-172089, JP Patent Publication No. 1997-143350, and JP Patent Publication No. 1996-337678. In another reference, JP Patent Publication No. 1995 - 33968, anti-static property is achieved by adding a sulfonate type anionic system anti-static material. However, there is a residual problem in the sustainability of the anti-static property of sulfonate type anionic system. In these references, either halogen-based, phosphorus-based agents, or antimony compounds are used as flame retardants.

In the prior art, when electrically conductive carbon black or metallic fibers, etc., are added to thermoplastic resins to impart anti-static property, properties such as toughness, surface appearance and coloring ability, etc., may suffer. For compositions comprising the sulfonate-type anionic system as the anti-static material, there may be residual problems in the sustainability of the anti-static property.

Besides properties such as anti-static and higher chemical resistance, it is desirable for polyester compositions also to have sliding and abrasion characteristics, as well as mechanical properties and flame resistance properties. In the field of electrical, electronic equipment and media components, it is especially desirable to have a flame resistance property of a minimum of UL-94 V-2 rating.

To improve the retardancy of thermoplastic compositions, it is known to add flame retardants to the compositions. Examples include phosphorous and halogen-based flame-retardants. However, when the anti-static material is used together with the conventional flame retardants, there is a drop in the modulus of elasticity of the composition. As a result, the shock resistance and toughness properties are affected.

There remains a need for flame retardant anti-static compositions for electronic, electrical, packaging, and media applications that are suitable for eco-applications, i.e., not containing chlorine, bromine, phosphorus, and antimony, as commonly used in the conventional flame-retardants. There also remains a need for a composition which has a balance of excellent anti-static ability, chemical resistance, sliding and abrasion characteristics, mechanical and flame resistance properties.

The present invention relates to a composition consisting essentially of a melamine cyanuric compound as a flame retardant and an anti-static material for excellent anti-static properties as well as a flame resistance property of UL94V-2 rating, along with excellent external appearance, coloring ability, toughness properties. Moreover, the composition of the invention illustrates improved elastic modulus property compared to the prior art compositions.

### SUMMARY OF INVENTION

The present invention relates to a polyester resin composition consisting essentially of a thermoplastic polyester system resin, an anti-static material, and a melamine cyanuric compound. In one embodiment, the thermoplastic polyester resin is a crystalline polyester resin. In another embodiment, the crystalline polyester resin is selected from a group consisting of polyethylene terephthalate, polybutylene terephthalate or their alloys.

The present invention further relates to a polyester resin composition consisting essentially of a thermoplastic polyester resin, a melamine cyanuric compound, and an anti-static material selected from a group consisting of polyesteramide, polyethylene glycol methacrylate copolymer, polyetheresteramide, polyetherester, polyetheramide, or a combination comprising at least one of the foregoing antistatic agents. In one embodiment, the melamine cyanuric compound is formed with melamine (2, 4, 6 -triamino-1, 3, 5-triazine) and cyanuric acid (2, 4, 6-trihydroxy-1, 3, 5-triazine) and / or its tautomeric counterparts. In yet another embodiment, the composition further comprises at least an inorganic filler selected from a group consisting of talc, mica, barium sulfate, glass fiber, hallow glass fiber, carbon fiber, hollow carbon fiber, carbon nano tube, titania whiskers, fibrous walastonite, clay, silica, glass flakes, glass beads, and hollow fillers. The amount of fillers ranges from 0-150 wt.% of an inorganic filler for 100 wt. % of the polyester system.

The present invention also relates to articles consisting essentially of a thermoplastic polyester resin in the amount of 20 to 98 wt. %, an anti-static material in the amount of 1 - 30 wt. %, and a melamine cyanuric compound ranging from 1 to 50 wt. %.

### DETAILED DESCRIPTION

In the present invention, a resin composition is obtained with a flame-resistance of property of at least UL94 V-2, without the need for a halogen-containing flame retardant, a phosphorus flame retardant, an antimony flame retardant, or other auxiliary flame retardant agents. Furthermore, the composition displays a stable anti-static property in conjunction with excellent mechanical properties, sliding characteristics, external appearance and coloring ability and toughness. Lastly, the composition illustrates excellent elastic modulus property as well as shock resistance property.

The composition of the invention is suitable for use in packaging applications, components for optical disks and magnetic disks, electronic and electrical equipments, home equipments or office automation equipments. The composition consists essentially of (A) a thermoplastic polyester system resin, (B) an anti-static material and (C) a melamine cyanuric compound.

Component A is a thermoplastic polyester resin. In one embodiment, the thermoplastic polyester resin is a polymer or a copolymer obtained by the condensation reaction of main raw materials, aromatic dicarboxylic acid (or its ester formation conductor) and diol (or its ester formation conductor). Moreover, the polyester resin can also be an open ring polymer having hydroxyl radicals and carboxylic acid radicals in molecules such as lactones.

In one embodiment, the polyester is a crystalline polyester resin for excellent balance in processing, mechanical properties, electrical properties and heat resistance, etc. Examples of crystalline polyester resins include crystalline resins derived from one or more types of fatty series of number of carbon atoms 2 ~ 10 or alicyclic diol or their compounds, and aromatic dicarboxylic acid whose aromatic groups are C6 ~ C20 aryl groups. Polyesters derived from the fatty series of number of carbon atoms 2 ~ 10 or alicyclic diol and more than 1 type of aromatic dicarboxylic acid can be suitable used as a crystalline thermoplastic polyester.

In one embodiment, the crystalline polyester is derived from the aliphatic diol and the aromatic dicarboxylic acid having a repetitive unit of the formula.

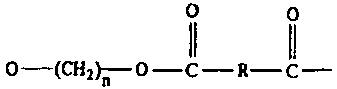

In the above formula, n is an integer from 2 ~ 6, and R is an aryl group, arylalkyl radical or an alkyl aryl group of carbon number 6 ~ 20 which consists of de-carboxylation residue derived from the aromatic dicarboxylic acid.

Examples of the aromatic dicarboxylic acid derived from the de-carboxylation residue R include the isophthalic acid, the terephthalic acid, 1, 2-di (p-carboxy phenyl) ethane, 4, 4'-dicarboxy diphenyl ether, 4, 4'-bis benzoic acid, and their compounds. All these acids have more than 1 aromatic nucleus. Moreover, acids having condensed rings such as 1, 4-, 1, 5-or 2, 6-naphthalene dicarboxylic acid are also acceptable.

Examples of dicarboxylic acids include terephthalic acid, isophthalic acid, naphthalene dicarboxylic acid or their compounds. Moreover, 2 other functionality carboxylic acids such as aliphatic dicarboxylic acids like the oxalic acid, malonic acid, adipic acid, suberic acid, azelaic acid, sebacic acid, decane dicarboxylic acid, and cyclohexane dicarboxylic acid and their ester formation conductors can also be used within the range without affecting the properties of the composition. Examples include straight chain fatty series of number of carbon atoms 2 ~ 15 and cycloaliphatic diols such as ethylene glycol, propylene glycol, 1, 4-butanediol, trimethylene glycol, tetramethylene glycol, neopentyl glycol, diethylene glycol, cyclohexane dimethanol, heptane 1, 7-diol, octane 1, 8-diol, neopentyl glycol, decanes 1, 10-diol; polyethylene glycol; 2 , 2-bis (4-hydroxyphenyl) propane, bis (4-hydroxyphenyl) methane, bis (4-hydroxyphenyl) naphthyl methane, bis (4-hydroxyphenyl) phenylmethane, bis (4 -hydroxyphenyl)-(4-isopropylphenyl) methane, bis (3, 5 - dichloro-4-hydroxyphenyl) methane, bis (3, 5-dimethyl-4-hydroxyphenyl) methane, 1, 1 -bis (4-hydroxyphenyl) ethane, 1-naphthyl-1, 1-bis, (4-hydroxyphenyl) ethane, 1-phenyl-1, 1-bis (4-hydroxyphenyl) ethane, 1, 2-bis (4-hydroxyphenyl) ethane, 2-methyl-1, 1-bis (4-hydroxyphenyl) propane, 2, 2-bis (3, 5-dimethyl-4-hydroxyphenyl) propane called as bisphenol A; 1-ethyl-1, 1-bis (4-hydroxyphenyl) propane, 2, 2-bis (3, 5-dichloro-4-hydroxyphenyl) propane, 2, 2-bis (3, 5-dibromo-4-hydroxyphenyl) propane; dihydroxy diaryl alkanes such as 2, 2-bi (3-chloro-4-hydroxyphenyl) propane, 2, 2-bis (3-methyl-4-hydroxyphenyl) propane, 2, 2-bis (3-fluoro-4-hydroxyphenyl) propane, 1, 1-bis (4-hydroxyphenyl) butane, 2, 2-bis (4-hydroxyphenyl) butane,1, 4-bis (4-hydroxyphenyl) butane, 2, 2-bis (4-hydroxyphenyl) pentane, 4-methyl-2, 2-bis (4-hydroxyphenyl) pentane, 2, 2-bis (4-hydroxyphenyl) hexane, 4, 4-bis (4-hydroxyphenyl) heptane, 2, 2-bis (4-hydroxyphenyl) nonane, 1, 10-bis (4-hydroxyphenyl) decane, 1, 1-bis (4-hydroxyphenyl)-3,3,5-trimethyl cyclohexane, 2,2-bis (4-hydroxyphenyl)-1,1,1,3,3,3-hexafluoro propanes, etc; dihydroxy diaryl cycloalkanes such as 1, 1-bis (4-hydroxyphenyl) cyclohexane, 1,1-bis (3,5-dichloro-4-hydroxyphenyl) cyclohexane, 1,1-bis (4-hydroxyphenyl) cyclodecane, etc; dihydroxy diaryl sulfides such as bis (4 - hydroxyphenyl) sulfide, bis (3-methyl-4-hydroxyphenyl) sulfide, and bis (3, 5-dimethyl-4-hydroxyphenyl) sulfides, etc; dihydroxy diaryl sulfoxides such as bis (4 - hydroxyphenyl) sulfoxides; dihydroxy diphenyls such as 4, 4'-dihydroxydiphenyls; dihydric phenols such dihydroxy arylfluorens such as 9, 9 bis (4-hydroxyphenyl) fluorenes, etc or dihydroxy benzens such hydroquinone, resorcinols, and methyl hydroquinone; dihydroxynaphthalenes such as 1, 5-dihydroxynaphthalene, 2, 6-dihydroxynaphthalenes etc. can be used as the diol element without any problem. Moreover, more than 2 diol elements can be combined and used if necessary.

In one embodiment, the polyesters are polyethylene terephthalate (PET) and polybutylene terephthalate (PBT). These are obtained by polymerizing carboxylic acid and diol elements. This polyester can be manufactured under the existence or non-existence of a general condensation polymerization catalyst of which titanium, germanium, and antimony, etc. are representative examples. Polyester can also be manufactured by the interfacial polymerization method, melting polymerization method, etc.

A single type of polyester can be used on its own or more than two types of polyesters can be used in combination in this invention. In addition, copolyesters can also be used. When more than two kinds of thermoplastic polyesters are used in combination, combinations such as polybutylene terephthalate and polyethylene terephthalate are desirable and these can also be formed into alloys.

The molecular weight of the thermoplastic polyester used in this invention is not limited in case of the range in which the physical properties of the molded article are not affected. In one embodiment, polyesters having a weight average molecular weight (marked in polystyrene conversion as indicated by the measurement of GPC) is 10,000 ~ 200,000. In another embodiment, in the range of 20,000 ~ 150,000 for excellent mechanical properties and the compactibility in the molded articles. In one embodiment wherein the thermoplastic polyester has a weight average molecular weight of less than 10,000, the mechanical and physical properties of the resin itself may be insufficient, e.g., the mechanical properties of the molded article may be insufficient. On the other hand and in another embodiment, with an weight average molecular weight greater than 200,000, the melting viscosity might increase and the compactibility may decrease at the time of molding.

In one embodiment, an component formed with unit co-polyester derived from the above-mentioned polyester and a small amount of (e. g. about 0.5 ~ 5 % by weight) aliphatic acid and / or fatty series polyol may also be used in this invention as crystalline polyester. Glycols like the poly (ethylene glycol) can be enumerated in the fatty series polyols. This type of polyester can be manufactured according to the teaching of US Patent Nos. 2465319 and 3047539.

Component B - Anti-Static Agent. The term "anti-static agent" refers to several materials that can be either melt-processed into polymeric resins or sprayed onto commercially available polymeric forms and shapes to improve conductive properties and overall physical performance.

The anti-static agent is selected from the group of polyethylene glycol methacrylate copolymer, polyether amide, polyether-ester amide, polyether-ester, and polyesteramide as a high molecular anti-static material. A high molecular type anti-static material provides a higher sustenance of anti-static property than other anti-static materials. In one embodiment, a high molecular type anti-static material may be used in combination with other anti-static materials.

Polymeric anti-static agents have been shown to be fairly thermally stable and processable in the melt state in their neat form or in blends with other polymeric resins. Examples of polyetheramides, polyetheresters and polyetheresteramides include block copolymers and graft copolymers both obtained by the reaction between a polyamide-forming compound and/or a polyester-forming compound, and a compound containing a polyalkylene oxide unit. Polyamide forming compounds include aminocarboxylic acids such as ω-aminocaproic acid, ω-aminoenanthic acid, ω-aminocaprylic acid, ω-aminopelargonic acid, ω-aminocapric acid, 11-aminoundecanoic acid and 12-aminododecanoic acid; lactams such as ε-caprolactam and enanthlactam; a salt of a diamine with a dicarboxylic acid, such as hexamethylene diamine adipate, hexamethylene diamine sebacate, and hexamethylene diamine isophthalate; and a mixture of these polyamide-forming compounds. It is preferred that the polyamide-forming compound is a caprolactam, 12-aminododecanoic acid, or a combination of hexamethylene diamine and adipate.

In one embodiment, the anti-static agent is a polymeric anti-static such as PELESTAT 6321, available from Sanyo, or PEBAX MH1657, available from Atofina, are nonlimiting examples of commercially available polymeric anti-static agents that may be added to polymeric resins to improve conductive properties. Other commercially available anti-static agents are IRGASTAT P18 and P22 from Ciba-Geigy.

Commercial monomeric anti-static agents are PATIONIC 1042 and PATIONIC AS10, available from Patco, or STATEXAN® K1, available from Bayer.

Component C-Melamine cyanuric compound Melamine cyanuric acid compound is a compound formed by reacting melamine (2, 4, 6-triamino -1, 3, 5-triazine) and cyanuric acid (2, 4, 6-trihydroxy-1, 3, 5-triazine) and / or its tautomerization counterparts.

In one embodiment, the melamine cyanuric acid is obtained by reacting melamine and isocyanuric acid in an aqueous medium. In another embodiment, a surface treated melamine cyanuric acid is used. The surface treated compound can be obtained by using a substantially uniform solution comprising an organic solvent and a surface treating agent for melamine cyanuric acid dissolved therein. In one embodiment, the surface treating agent is a polymer which is similar to the resin component used in the composition. In another embodiment, the surface treating agent is a material which has good compatibility with the resin to be formulated therein and is capable of being dispersed uniformly. In another embodiment, the surface treating agent is used in an amount capable of dissolving and forming a thin and uniform film (a thickness of 0.001 to 0.5 µm or so) on the surface of melamine.cyanuric acid.

In one embodiment, melamine cyanuric acid compound is obtained by mixing a solution of melamine with solution of cyanuric acid, or by a method of forming salt by adding other solutions while dissolving. Although there is no specific limitation to the mixing ratio of the melamine and the cyanuric acid, for an optimal heat stability of the thermoplastic polyester resin compound, in one embodiment the mixing ratio is kept close to equimolar. In another embodiment, the mole ratio is 1:1. In yet another embodiment, the mean particle size of the melamine cyanuric acid compound is in the range of 0.01 ~ 250 µm. In yet another embodiment, the mean particle size is 0.5 ~200 µm.

The melamine cyanuric acid compound is added in an amount to provide UL94V-2 rating, even when used on its own as a flame retardant without the addition of other flame retardants in the art. The melamine cyanuric acid compound when used as a flame retardant in the present invention, is environmentally suitable, as it does not contain phosphorus, antimony or halogen, etc.

Furthermore, the composition of the invention displays improved elasticity properties with the combination of the melamine cyanuric acid compound and the above-mentioned anti-static materials. Articles formed do not crack easily at the time of molding, and further display excellent shock resistance properties.

Component D - Inorganic Filler- In one embodiment, inorganic fillers are included in the composition. Examples include inorganic fibrous materials such as glass fiber, hollow glass fiber, asbestos fiber, carbon fiber, hollow carbon fiber, carbon nano tube, silica fiber, silica alumina fiber, zirconia fiber, nitride boron fiber, nitride silicon fiber, boron fiber, titania whiskers, and fibrous warastonite can be used as inorganic fillers.

In one embodiment, fibrous filters are processed with sizing agents or finishing agents are used. Examples include fillers treated with urethane systems or epoxy systems as these sizing agents, as well as silane system compounds, and functionality compounds such as the aminosilane system, epoxysilane system, epoxy system compound, isocyanate system compound, and titanate system compound, etc. as finishing agents.

Moreover, inorganic and irregular materials such as talc, mica, clay, warastonite, glass beads, glass flakes, mild glass, glass balloon, hollow fillers, warastonite, heavy or light quality calcium carbonate, magnesium carbonate, barium sulfate, aluminium hydroxide, silious earth, and kaolin can be used. In one embodiment, these inorganic and irregular materials are processed with finishing agents.

Inorganic fillers can be used singly or more than two types can be used together. In addition, fibrous fillers can be used together with non-fibrous fillers. By combining fillers, the coefficient of linear expansion can be controlled and as a result, for a resin composition with excellent dimensional stability.

Other Optional Additives: In one embodiment, antioxidants such as the phenolic system or the phosphite system, etc, and crystalline nucleus agents such as ionomer and metal carboxylates which are the saponification materials of ethylene and unsaturated carboxylic acid can be mixed singly or together with more than 2 types if necessary, in this invention. In addition, well-known additives such as antioxidants, stabilizers, ultraviolet rays absorbants, photostabilizers, mold lubricants, pigments, dyestuff, lubricants, and plasticizer, singly or more than 2 types together, can be used to an extent up to which not impacting the properties of the composition.

Mixing Ratios In one embodiment, the composition comprises a total of components (A) and (C) in an amount of 100 % by weight, and from 1 ~ 30 % by weight of component (B), the anti-static material. In another embodiment, (B) is used in the range of 3 ~ 25 % by weight for a total 100% by weight of (A) and (C). In yet another embodiment wherein a large amount of anti-static material (B) is used, compatibility with the thermoplastic resins may be affected causing a stratified flaking in the molded article.

With respect to the melamine cyanuric acid compound (C), in one embodiment, it is present in an amount of 1 ~ 50 wt. % (for a total resin composition weight of 100 wt.%). In another embodiment, it is present in an amount of 3 ~ 40 wt.%. In yet another embodiment, in an amount of 5 ~ 30 % by weight for a composition with high flame resistance property, improved elasticity, for molded articles which do not crack easily and with excellent shock resistance.

The thermoplastic polyester resin component (A) is usually within the ratio of 20 ~ 98 % by weight, excluding the above-mentioned (B) and (C). Moreover, when the total of (A) - (C) is 100 parts by weight, inorganic filler component (D) may be added in the range from 0 to 150 parts by weight, for 100 parts by weight of total (A) - (C). In one embodiment, the inorganic filler (D) is added in an amount of 3 ~ 130 parts by weight. In yet another embodiment, in a quantity of 5 ~ 100 parts by weight.

Method of preraration. Methods for preparing the composition of this invention are not specifically limited. For instance, the composition be manufactured by melting and mixing the components and other additives, resins, etc. in a melting and kneading machine such as a single or twin-screw extruder. In one embodiment wherein one of the compounding agent is a liquid, it can be added to a twin-screw extruder using a liquid supply pump etc.

In one embodiment, the composition may be prepared by dry blending followed by melt processing, the latter operation frequently being performed under continuous conditions such as extrusion. In another exemplary method, the components of the composition are fed directly into the throat of a twin screw extruder and extruded at a temperature greater than the melting point of the thermoplastic resin. It is also possible for the various components of the composition to be fed into the extruder sequentially. Additionally, some of the components such as the antioxidant and the anti-static agent may be fed into the extruder in a masterbatch form. The strand emerging from the extruder is quenched in a water bath, pelletized and subjected into additional processing such as injection molding, blow molding, vacuum forming, and the like.

Methods for forming articles employing the thermoplastic polyester resin composition of the invention are not specifically limited. They may include generally used molding methods such as injection molding, blow molding, extrusion molding, vacuum molding, press molding, calendar molding, etc.

As the composition has excellent flame resistance property, balanced with other characteristics such as anti-static and sliding properties, articles formed may be used in media application such as data cartridge, e.g., digital audio tape recorder, digital videotape, and videotapes and components devices such as sensors, optical disk bearings for optical disks, magnetic disks, blue laser disks, of CD, DVD, MD, etc. In one embodiment, the articles may be used in copying machines, housings of home electric appliances, office automation equipments such as components of printers, personal computers and fax machines as gears, spacers, etc., electronic and electrical components such as connectors, switches, fuse-holders, breaker cases, etc.

This disclosure is further illustrated by the following example. In the examples:

The thermoplastic polyester resin (A): is polybutylene terephthalate or PBT Valox 310 (brand name) made by General Electric Company.

The anti-static material (B): is Pelestat NC6321 (brand name) made by the Sanyo Chemical Industries Company.

The melamine cyanuric acid compound (C): is MC-440 (brand name) made by the Nissan Chemical Industries, Ltd. Company.

Filler (D-1): is TALC NK-48 (brand name) made by Fuji Talc Industry.

Filler (D-2): is continuous glass fiber product (chopped strands) ECS 03T-120 made by the Nippon Electric Glass Company.

Component (E): is stabilizer ADK STAB AO-60 (brand name) made by the Asahi Denka Kogyo K.K. Company.

In the examples, each element is melted and mixed in the proportion (weight %) shown in Table 1, using a 40mm twin-screw extruder. The condition is set at a mixing temperature of 250°C, screw speed of 250 rpm, and an output quantity of 100 kg /hr, to produce resin pellets. Pellets are molded into test specimen using an injection-molding machine made by Orient Machine and Metal Company, under the condition of setup temperature of 250 °C, and a metal mold temperature of 50 °C.

The following tests are conducted on the molded specimen.

Surface electrical resistance test: Test specimen of 50 mm × 50 mm × 3.2 mm are measured by an electric charge of 100V in accordance to ASTM D257.

Haft-life test: Half-life test is measured at an applied voltage of 9.0KV in accordance with JIS L 1094.

Flexural modulus test: Measured in a room at a controlled room temperature of 23 °C and 50% humidity, in accordance with ASTM D790.

Slide and abrasion test: A thrust type abrasion testing machine is used, using a stainless steel S45C as the counterpart material. In the tests, the weight loss in weight % is measured for a load of 2.5 Kg/cm² and a rotation speed of 300 mm/sec for 6 hours.

Flame resistance test: Combustion test is carried out on a test specimen of 1.0 mm wall thickness according to UL94V procedure.

**Table 1**

| **Mixing element** | **Ex. 1** | **Ex.2** | **Ex. 3** | **Ex.4** | **Comp. Ex. 1** | **Comp. Ex. 2** | **Comp. Ex. 3** |
|---|---|---|---|---|---|---|---|
| (A) PBT | 84.9 | 79.9 | 69.9 | 100 | 89.9 | 79.9 | 79.9 |
| (B) Anti-static material | 10 | 10 | 10 | 10 | 10 | 10 | 10 |
| (C) Melamine cyanuric compound | 5 | 10 | 10 | 10 | | | |
| (D-1) Talc | | | 10 | | | 10 | |
| (D-2) Glass fiber | | | | 10 | | | 10 |
| Stabilizer | 0.1 | 0.1 | 0.1 | 0.1 | 0.1 | 0.1 | 0.1 |

| **Physical properties** | | | | | | | |
|---|---|---|---|---|---|---|---|
| Surface electrical resistance (Ω/cm²) 100V | 5 x 10¹² | 1 x 10¹² | 8 x 10¹² | 9 x 10¹² | 9 x 10¹² | 2 x 10¹² | 5 x 10¹² |
| Half-life (sec) 9KV | 3 | 1 | 1 | 1 | 15 | 10 | 10 |
| Flexural Modulus-Kg.cm² | 21000 | 24000 | 26000 | 38000 | 18000 | 22000 | 35000 |
| Slide and abrasion test (weight loss %) | 0.0003 | 0.0005 | 0.0017 | 0.0002 | 0.0003 | 0.0003 | 0.0002 |
| Flame resistance - UL94V | V2 | V2 | V2 | V2 | HB | HB | HB |

As illustrated in Table 1, by mixing the anti-static material and the melamine cyanuric acid compound, a flame resistance of a level of UL94V-2 can be achieved in the composition of the invention. The comparative examples provide a flame resistance of HB level only. Since the modulus of elasticity is also improved, it is possible to obtain a molded article with high bending elasticity. In addition. Furthermore, with improved surface electrical resistance properties and low value for the half-life, a molded article with excellent anti-static ability can be obtained.

## Claims

1. A thermoplastic resin composition consisting essentially of
a) 20 to 98 wt. % of a polyester resin
b) 1 to 30 wt.% of an and-static agent selected from the group consisting of polyetheresteramide, polyetherester, polyetheramide, polyesteramide, polyethylene glycol methacrylate copolymer, or a combination comprising at least one of the foregoing antistatic agents; and
c) 1 to 50 wt.% of a melamine cyanuric compound
wherein the total weight of the composition is 100% by weight, and wherein the composition has a flammability rating of V-2 and a surface resistivity of less than 10¹⁴ ohms/sq.

2. The thermoplastic resin composition of claim 1, wherein the polyester resin is a crystalline polyester resin selected from the group consisting of polyethylene terephthalate, polybutylene terephthalate and alloys thereof.

3. The composition of any one of claims 1-2, further comprises 0.150 wt. % of an inorganic filler for 100 wt. % of the thermoplastic resin composition.

4. The composition of any one of claims 1-3, wherein the inorganic filter is selected from the group consisting of talc, mica, barium sulfate, glass fibers, hollow glass fibers, carbon fibers, hollow carbon fibers, carbon nanotubes, titania whiskers, fibrous wollastonite, clay, silica, glass flakes, glass beads, hollow fillers, and mixtures thereof.

5. The composition of any one of claims 1-4, consisting essentially of
20 to 98 wt. % of a polyethylene terephthalate, a polybutylene terephthalate or an alloy thereof,
1 to 30 wt. % of at least a polyetheresteramide, a polyetherester, a polyetheramide, or a combination thereof; and
1 to 50 wt % of a melamine cyanuric acid compound
wherein the total weight of the composition is 100% by weight.

6. The composition of any of claims 1-5, consisting essentially of:
20 to 98 wt. % a polyethylene terephthalate, a polybutylene terephthalate or an alloy thereof,
3 to 25 wt. % of a polyetheresteramide, a polyetherester, a polyetheramide, or a combination thereof;
5 to 30 wt. % of a melamine cyanuric acid compound; and
up to 75 wt. % of an inorganic filler,
wherein the total amount of the composition is 100 by weight.

7. An article molded from the composition of any one of claims 1- 6, for use as a component in a packaging application, optical disks, magnetic disks, electronic equipment, electrical equipment, home equipment and office automation equipment.

## Patentansprüche

1. Thermoplastische Harzzusammensetzung, bestehend im Wesentlichen aus
a) 20 bis 98 Gew.-% eines Polyesterharzes;
b) 1 bis 30 Gew.-% eines Antistatikums, ausgewählt aus der Gruppe von Polyetheresteramid, Polyetherester, Polyetheramid, Polyesteramid, Polyethylenglykol/Methacrylat-Copolymer oder einer Kombination, welche mindestens eines der vorgenannten Antistatika umfasst; und
c) 1 bis 50 Gew.-% einer Melamincyanurat-Verbindung;
wobei das Gesamtgewicht der Zusammensetzung 100 Gew.-% beträgt und wobei die Zusammensetzung die Brandschutzklasse V-2 und einen spezifischen Oberflächenwiderstand von weniger als 10¹⁴ Ohm/sq bzw. Ohm aufweist.

2. Thermoplastische Harzzusammensetzung nach Anspruch 1, wobei das Polyesterharz ein kristallines Polyesterharz ist, welches ausgewählt ist aus der Gruppe von Polyethylenterephthalat, Polybutylenterephthalat und deren Mischungen.

3. Zusammensetzung nach einem der Ansprüche 1 oder 2, weiterhin umfassend 0 bis 150 Gew.-% eines anorganischen Füllstoffs, bezogen auf 100 Gew.-% der thermoplastischen Harzzusammensetzung.

4. Zusammensetzung nach einem der Ansprüche 1 bis 3, wobei der anorganische Füllstoff ausgewählt ist aus der Gruppe von Talk, Glimmer, Bariumsulfat, Glasfasern, Glashohlfasern, Kohlenstofffasern, Kohlenstoffhohlfasern, Kohlenstoffnanoröhren, Titandioxid-Haarkristallen (Titandioxid-Whiskern), faserförmigem Wollastonit, Ton, Kieselsäure, Glasplättchen, Glasperlen, Hohlfüllstoffen und deren Mischungen.

5. Zusammensetzung nach einem der Ansprüche 1 bis 4, im Wesentlichen bestehend aus
20 bis 98 Gew.-% eines Polyethylentherephthalats, eines Polybutylentherephthalats oder deren Mischungen;
1 bis 30 Gew.-% mindestens eines Polyetheresteramids, eines Polyetheresters, eines Polyetheramids oder deren Kombination; und
1 bis 50 Gew.-% einer Melamincyanursäure-Verbindung;
wobei das Gesamtgewicht der Zusammensetzung 100 Gew.-% beträgt.

6. Zusammensetzung nach einem der Ansprüche 1 bis 5, bestehend im Wesentlichen aus
20 bis 98 Gew.-% eines Polyethylentherephthalats, eines Polybutylentherephthalats oder deren Mischungen;
3 bis 25 Gew.-% eines Polyetheresteramids, eines Polyetheresters, eines Polyetheramids oder deren Kombination;
5 bis 30 Gew.-% einer Melamin-Cyanursäure-Verbindung; und
bis zu 75 Gew.-% eines anorganischen Füllstoffs;
wobei das Gesamtgewicht der Zusammensetzung 100 Gew.-% beträgt.

7. Gegenstand, geformt mit der Zusammensetzung nach einem der Ansprüche 1 bis 6, zur Verwendung als Komponente in Verpackungsanwendungen, optischen Datenspeichern (optischen Platten), magnetischen Datenspeichern (Magnetplatten), elektronischen Geräten, elektrischen Geräten, Heimgeräten (Home Equipment) und Ausrüstungen für die Büroautomation.

## Revendications

1. Composition de résine thermoplastique comprenant essentiellement de:
a) 20 à 98 % en poids d'une résine de polyester
b) 1 à 30 % en poids d'un agent antistatique choisi dans le groupe constitué par un polyétheresteramide, un polyétherester, un polyétheramide, un polyesteramide, un copolymère de méthacrylate-polyéthylène glycol ou une combinaison comprenant au moins l'un des agents antistatiques précédents; et
c) 1 à 50 % en poids d'un composé d'acide cyanurique-mélamine dans laquelle le poids total de la composition est 100 % en poids, et la composition a un degré d'inflammabilité V-2 et une résistivité superficielle inférieure à 10¹⁴ ohms.cm.

2. Composition de résine thermoplastique selon la revendication 1, dans laquelle la résine de polyester est une résine de polyester cristalline choisie dans le groupe constitué par le téréphtalate de polyéthylène, le téréphtalate de polybutylène et leurs alliages.

3. Composition selon l'une quelconque des revendications 1 à 2, comprenant en outre de 0 à 150 % en poids d'une charge inorganique pour 100 % en poids de la composition de résine thermoplastique.

4. Composition selon l'une quelconque des revendications 1 à 3, dans laquelle la charge organique est choisie dans le groupe constitué par le talc, le mica, le sulfate de baryum, les fibres de verre, les fibres de verre creuses, les fibres de carbone, les fibres de carbone creuses, les nanotubes de carbone, les trichites d'oxyde de titane, la wollastonite fibreuse, l'argile, la silice, les paillettes de verre, les billes de verre, les charges creuses, et leurs mélanges.

5. Composition selon l'une quelconque des revendications 1 à 4, comprenant essentiellement de:
20 à 98 % en poids de téréphtalate de polyéthylène, de téréphtalate de polybutylène ou d'un alliage de ceux-ci;
1 à 30 % en poids d'au moins un polyétheresteramide, un polyétherester, un polyétheramide ou une combinaison de ceux-ci; et
1 à 50 % en poids d'un composé d'acide cyanurique-mélamine;
dans laquelle le poids total de la composition est de 100 % en poids.

6. Composition selon l'une quelconque des revendications 1 à 5, comprenant essentiellement de:
20 à 98 % en poids de téréphtalate de polyéthylène, de téréphtalate de polybutylène ou d'un alliage de ceux-ci;
3 à 25 % en poids d'un polyétheresteramide, d'un polyétherester, d'un polyétheramide ou d'une combinaison de ceux-ci;
5 à 30 % en poids d'un composé d'acide cyanurique-mélamine; et
jusqu'à 75 % en poids d'une charge inorganique;
dans laquelle le poids total de la composition est de 100 % en poids.

7. Article moulé de la composition selon l'une quelconque des revendications 1 à 6, pour une utilisation comme composant dans une application de conditionnement, des disques optiques, des disques magnétiques, un équipement électronique, un équipement électrique, un équipement ménager et un équipement de bureautique.
